# EUROPÄISCHE PATENTSCHRIFT

(11) **EP 0 444 518 B1**
(45) Veröffentlichungstag und Bekanntmachung des Hinweises auf die Patenterteilung: **28.09.1994**
(21) Anmeldenummer: 91102471.9
(22) Anmeldetag: 20.02.1991
(51) Int. Cl.: H02P 7/628, H02P 5/402

(54) **Regelsystem für eine pulswechselrichtergesteuerte Drehfeldmaschine**
Regulating system for a pulse inverter controlled rotating field machine
Système pour réguler une machine à champ tournant commandée par onduleur d'impulsion

(30) Priorität: 01.03.1990 DE 4006447
(43) Veröffentlichungstag der Anmeldung: 04.09.1991
(73) Patentinhaber: LOHER AKTIENGESELLSCHAFT, D-94095 Ruhstorf (DE)
(72) Erfinder: Geiselberger, Georg, W-8399 Rotthalmünster (DE)
(74) Vertreter: Zinnecker, Armin, Dipl.-Ing.

(56) Entgegenhaltungen:
- EP-A- 0 179 356
- DE-A- 2 754 241
- DE-A- 3 149 693
- PATENT ABSTRACTS OF JAPAN, vol. 10, no. 248 (E-431)(2304) 26 August 1986
- PATENT ABSTRACTS OF JAPAN, vol. 9, no. 75 (E-306)(1798) 04 April 1985

## Beschreibung

Die Erfindung ein Regelsystem für eine pulswechselrichtergesteuerte Drehfeldmaschine nach dem Oberbegriff des Anspruchs 1.

Zur Regelung einer pulswechselrichtergespeisten Drehfeldmaschine, insbesondere zur Regelung einer umrichtergespeisten Asynchronmaschine, wird üblicherweise von einem Pulsgenerator ein Spannungsmuster zur geeigneten Ansteuerung des Pulswechselrichters so erzeugt, daß bei exakter Funktion der Wechselrichterschalter des Pulswechselrichters die gewünschte Grundschwingung sowie möglichst geringe Oberschwingungen auftreten. Dabei können jedoch in manchen Betriebsbereichen große Fehler durch nicht ideales Verhalten der Wechselrichterschalter auftreten. Insbesondere weisen die Wechselrichterschalter und die zugehörigen Ansteuerschaltungen Zeitverzögerungen auf.

Bisher bekannte Verfahren korrigieren die auftretenden Fehlerz.B. dadurch, daß die bei einer Schalthandlung auftretenden Zeit-Fehler bei der nächsten Schalthandlung berücksichtigt werden. Eine Schwäche dieser korrigierenden Verfahren besteht darin, daß diese Fehler abhängig vom Arbeitspunkt des Systems auftreten und daher nicht vollständig ausgeregelt werden können. Die Fehler in der Motorspannung durch den Pulswechselrichter bzw. die nicht-ideale Eingangsgleichspannung des Pulswechselrichters ist bei bestimmten Betriebszuständen der Drehfeldmaschine oder des Wechselrichters nur begrenzt kompensierbar, insbesondere im Betriebszustand des Strom-Nulldurchgangs. In diesen Betriebszuständen ist aber eine gute Kompensation sehr wichtig.

Ein Regelsystem für eine pulswechselrichtergesteuerte Drehfeldmaschine ist aus der Dissertation "Das Verfahren zur Regelung der pulsumrichtergespeisten Asynchronmaschine durch Prädiktion und Optimierung in Echtzeit" von Siegfried Stadtfeld, Fachbereich Elektrotechnik der Bergischen Universität - GH Wuppertal, 1987, bekannt. Dieses vorbekannte Regelsystem arbeitet allerdings auf Strombasis, nicht auf Spannungsbasis. Dervorzugebende Soll-Strom kann allerdings nur schwer ermittelt werden. Er ist darüber hinaus auch vom Gesamtsystem und insbesondere von der Drehfeldmaschine abhängig.

Aufgabe der Erfindung ist es, ein Regelsystem für eine pulswechselrichtergesteuerte Drehfeldmaschine nach dem Oberbegriff des Anspruchs 1 zu schaffen, mit dem Fehler im Pulswechselrichter und in der dem Pulswechselrichter vorgegebenen Gleichspannung vollständig ausgeregelt werden können.

Erfindungsgemäß wird diese Aufgabe durch die im kennzeichnenden Teil des Anspruchs 1 angegebenen Merkmale gelöst. Als Sollwert wird nicht der Motorstrom, sondern die Motorspannung benutzt. Im Pulsgenerator wird die vektorielle Differenz zwischen dem Soll- Spannungsvektor und dem Ist-Spannungsvektor gebildet. Diese vektorielle Differenz wird anschließend integriert. Das Ergebnis dieser Integration, also der integrierte Differenzvektor, wird zur Beeinflussung der Schaltzustände des Pulswechselrichters verwendet. Durch die Integration und Auswertung dertatsächlich vorliegenden Spannungsdifferenz zwischen der Sollspannung und der tatsächlich vorliegenden, gemessenen Istspannung ist gewährleistet, daß der Ist-Spannungsvektor dem Soll-Spannungsvektor tatsächlich im zeitlichen Mittel nachgebildetwird. Die Fehler im Pulswechselrichter und - soweit vorhanden - in der dem Pulswechselrichter durch beispielsweise einen Netzgleichrichter vorgegebenen Gleichspannung werden automatisch ausgeregelt. Da mit der Spannungsdifferenz auch der Soll-Spannungswert integriert wird, können auch Sollwertsprünge problemlos ausgeregelt werden. Die Nachteile der bekannten, lediglich korrigierenden Verfahren werden vermieden. Nach diesen bekannten, korrigierenden Verfahren ist der Fehler in der Motorspannung durch den Pulswechselrichter bzw. die nicht-ideale Eingangs- Gleichspannung des Pulswechselrichters bei bestimmten Betriebszuständen der Drehfeldmaschine und/oder des Pulswechselrichters, beispielsweise bei Strom-Nulldurchgang, nur begrenzt kompensierbar, obwohl in diesen Betriebszuständen eine gute Kompensation sehr wichtig wäre. Diese Fehler werden durch die Integration des Differenzvektors zwischen Soll-Spannungsvektor und Ist-Spannungsvektor ausgeregelt, also in bestmöglichem Maße kompensiert. Gleichwohl können mit dem erfindungsgemäßen Regelsystem noch verhältnismäßig hohe Soll- bzw. Ist-Spannungen verarbeitetwerden. Das theoretische Maximum des Verhältnisses derverarbeitbaren Soll- bzw. Ist-Spannungen zur Versorgungsspannung beträgt 1,1 : V2 Grundschwingung). Mit dem erfindungsgemäßen Regelsystem ist ein Verhältnis der Soll- bzw. Ist-Spannungen zur Versorgungsspannung von bis zu 1,0 : ;/2 bei voller Modulationsfähigkeit erreichbar, bei Verzicht auf sinusbewertete Modulation auch darüber hinaus.

Nach dem erfindungsgemäßen Regelsystem wird die echt physikalisch an der Drehfeldmaschine erzeugte Ist-Spannung, also die Eingangsspannung der Drehfeldmaschine, vektoriell erfaßt und mit der vorgegebenen Soll-Spannung verglichen. Die mittlere Abweichung zwischen Soll-Spannung und Ist-Spannung wird dem Regelsystem zugeführt. Hierdurch werden beliebige Zeitverläufe des Soll-Spannungs-Vektors schnell berücksichtigt sowie Zeit-Fehler der Schaltfunktion ebenso ausgeregelt wie schnelle Änderungen der den Pulswechselrichter speisenden Gleichspannung, die beispielsweise aus dem Gleichspannungszwischenkreis eines Umrichters kommt. In weiten Betriebszustand-Bereichen wird ein nicht-äquidistantes Schaltmuster erzeugt, so daß störende Einzeltöne im Motor kaum auftreten.

Vorteilhafte Weiterbildungen der Erfindung sind in den Unteransprüchen beschrieben.

Vorteilhaft ist es, wenn der integrierte Differenzvektor, vorzugsweise der Betrag des integrierten Differenzvektors, mit einem Grenzwert verglichen wird und wenn in Abhängigkeit von diesem Vergleich ein neuer Schaltzustand bestimmt und an den Pulswechselrichter weitergeleitet wird. Für den Vergleich kann statt des Betrages des Differenzvektors auch eine Fläche, die z.B. an diesem Vektor orientiert ist, verwendet werden.

Der neue Schaltzustand wird vorzugsweise in Abhängigkeit von dem Soll-Spannungsvektor und dem integrierten Differenzvektor ermittelt, wobei der Schaltzustand vorzugsweise so verändert wird, daß sich der Differenzvektor als Folge dieser Schalthandlung verkleinert.

Vorzugsweise wird der Grenzwert in Abhängigkeit vom integrierten Soll-Spannungsvektor ermittelt. Der Grenzwert wird also nicht für alle Betriebszustände gleich vorgegeben, sondern in Abhängigkeit vom Soll-Spannungsvektor nachgeführt. Hierdurch kann das Regelsystem verschiedenen Betriebszuständen zusätzlich angepaßt werden.

Eine weitere vorteilhafte Weiterbildung ist gekennzeichnet durch einen mit mehrphasiger Wechselspannung, vorzugsweise Drehspannung, gespeisten Gleichrichter und einen vom Gleichrichter gespeisten und den Pulswechselrichter speisenden Gleichspannungs-Zwischenkreis. Die Drehfeldmaschine wird also von einem Umrichter, bestehend aus Gleichrichter, Gleichspannungs-Zwischenkreis und Pulswechselrichter, gesteuert.

Vorteilhaft ist es, wenn der Schaltzustand vom Pulsgenerator so bestimmt wird, daß er möglichst lange beibehalten werden kann. Hierdurch kann die Schaltfrequenz minimiert werden. Der Aufwand, insbesondere der schaltu ngstechnische Aufwand, für den Pulswechselrichterwird hierdurch verringert und der Wirkungsgrad wird verbessert. Durch die Berechnung des optimalen, also möglichst lange beibehaltbaren nächsten Schaltzustandes kann bei gleicher Welligkeit des Ausgangsstromes des Pulswechselrichters dessen Schaltfrequenz verringert werden. Hierdurch können die Schaltverluste minimiert werden.

Vorzugsweise wird die vektorielle Integration analog durchgeführt. Eine digitale Integration würde aufgrund der hohen erforderlichen Verarbeitungsgeschwindigkeit zu höheren Kosten führen. Es ist daher vorteilhaft, die Integration analog zu realisieren. Demgegenüber fällt der Nachteil, den Sollwert möglicherweise digital-analog wandeln zu müssen, kaum ins Gewicht.

Vorzugsweise wird das Ergebnis der Integration digitalisiert und digital weiterverarbeitet. Die Digitalisierung des Ergebnisses der Integration ist vom Zeitverhalten her unkritisch, da durch die Integration bereits ein geglättetes Signal vorliegt. Die Änderungsgeschwindigkeit des Ausgangssignals des Integrators ist aufgrund dieser Glättung verhältnismäßig gering. Die Genauigkeit an dieser Stelle des Gesamtsystems ist unkritisch.

Vorzugsweise wird ein neuer Schaltzustand aus einem Speicher ausgelesen, also nicht - was jedoch auch möglich ist - in Echtzeit errechnet. Der neue Schaltzustand wird aus dem Speicher in Abhängigkeit der oben angegebenen aktuellen Größen ausgelesen.

Aus der Literaturstelle Schmidt-Walter: "Wechselrichter zur Speisung von Drehstromsynchronmotoren", in "ETZ", Band 104 (1983), Heft 9, Seiten 417 - 420, ist ein Regelsystem für eine pulswechselrichtergespeiste Drehfeldmaschine bekannt, bei der im Pulsgenerator die Sollspannung mit der jeweiligen Istspannung verglichen, die Differenz anschließend zu einem Flußsignal aufintegriert und dieses Signal zur Beeinflussung eines Pulswechselrichters mit Hilfe von Zweipunktreglern verwendet wird. Dieses Regelsystem unterscheidet sich jedoch vom Gegenstand der Erfindung dadurch, daß der Vergleich und die Integration phasenweise und nicht vektoriell bezüglich des Gesamtflusses vorgenommen werden.

Die DE-PS 34 38 504 offenbart ein Verfahren zur Regelung einer Drehfeldmaschine, die über einen Wechselrichter mit eingeprägter Eingangs-Gleichspannung gespeist wird, mit folgenden Schritten: Bilden eines Fluß-Istwertes, Vergleich des Fluß-Istwertes mit einem Fluß-Sollwert, Bilden eines ersten Steuervektors mit einer der Pulszahl des Wechselrichters entsprechenden Anzahl von diskreten Lagen, die zyklisch durchlaufen werden, Weiterschalten des ersten Steuervektors auf die nächste diskrete Lage, wenn der Fluß-Istwert den Fluß-Sollwert übersteigt. Damit auch bei schnellen Änderungen des Fluß-Sollwertes ein störungsfreier Übergang möglich ist, wird als Fluß-Istwert die Komponente des Ist-Flußraumzeigers senkrecht zur Richtung derjenigen diskreten Lage, die als nächstes vom ersten Steuervektor eingenommen werden soll, verwendet. Der Fluß in Vektordarstellung (Raumzeigerdarstellung) wird zur Pulsung des Wechselrichters verwendet.

Aus der Literaturstelle Takashaki, Noguchi: "A new quick-response and high-efficiency control strategy of an induction motor" in IEEE Transactions on Industry Applications, vol.lA-22, No. 5, Sept./Okt. 1986, Seiten 820 - 827, ist ein Regelsystem für einen Induktionsmotor bekannt, bei dem sowohl Fluß und Drehmoment geregelt werden. Die Amplitude des Flusses wird in Übereinstimmung mit dem Drehmoment geregelt.

Aus der Literaturstelle Depenbrok, Klaes, "Zusammenhänge zwischen Schaltfrequenz, Taktverfahren, Momentpulsation und Stromverzerrung bei Induktionsmaschinen am Pulswechselrichter" in "ETZ-Archiv", Band 10 (1988), Heft 4, Seiten 131 - 134 ist ein Taktverfahren für Pulswechselrichter, die zur Speisung von Induktionsmaschinen verwendet werden, bekannt.

Die Erfindung schafft ein Regelsystem für eine über Pulswechselrichter gespeiste Drehfeldmaschine, vorzugsweise Asynchronmaschine, mit einem Pulsgenerator zur Steuerung des Schaltzustandes des Pulswechselrichters und mit einer Maschinenführung zur Vorgabe von Sollspannungen für den Pulsgenerator, wobei die Ausgangsspannungen des Pulswechselrichters gemessen und dem Pulsgenerator als dem tatsächlichen momentanen Schaltzustand des Pulswechselrichters entsprechende Ist-Spannungen zugeführt werden, wobei im Pulsgenerator die Differenz zwischen den Soll-Spannungen und den Ist-Spannungen gebildet wird, wobei diese Differenz anschließend integriert wird und wobei das Ergebnis dieser Integration zur Beeinflussung der Schaltzustände des Pulswechselrichters verwendet wird. Um die Flußbahn bei gleichzeitiger Minimierung der Schalthandlungen zu optimieren, erfolgt die Differenzbildung und Integration vektoriell, wird der integrierte Differenzvektor in einer Auswerteschaltung auf seine Lage bezüglich einer vorgegebenen Toleranzfläche überprüft, gibt die Auswerteschaltung ein Schaltsignal ab, wenn der integrierte Differenzvektor den Rand der Toleranzfläche erreicht, werden, ausgehend vom Durchstoßpunkt des Differenzvektors durch den Rand der Toleranzfläche, für alle möglichen Pulswechselrichter-Schaltzustände die zu erwartenden Bahnen und der nächste Durchstoßpunkt für den integrierten Differenzvektor ermittelt, wird daraus für alle Pulswechselrichter-Schaltzustände die zu erwartende Verweilzeit in der Toleranzfläche ermittelt und wird ein Schaltzustand, vorzugsweise der Schaltzustand mit der längsten zu erwartenden Verweilzeit, ausgewählt. Vorzugsweise wird in der Auswerteschaltung der Betrag des integrierten Differenzvektors mit dem Radius einer kreisförmigen Toleranzfläche verglichen. Weiter vorzugsweise wird für jeden möglichen Durchstoßpunkt vorab der Schaltzustand mit der längsten Verweilzeit ermittelt, in einen Speicher eingelesen und während des Betriebs bei Erreichen des jeweiligen Durchstoßpunktes ausgelesen.

Ein Ausführungsbeispiel der Erfindung wird nachstehend anhand der beigefügten Zeichnung im einzelnen erläutert. In der Zeichnung zeigt
Fig. 1 das Regelsystem in einer schematischen Darstellung,
Fig. 2 das Prinzipschaltbild eines Pulswechselrichters,
Fig. 3 den Pulsgenerator in einer schematischen Darstellung,
Fig. 4 die Spannungsvektoren des Pulswechselrichters in der a - ß-Ebene,
Fig. 5 eine Bahnkurve des Flußzeigers innerhalb der Toleranzfläche und
Fig. 6 ein Blockschaltbild des Pulsgenerators.

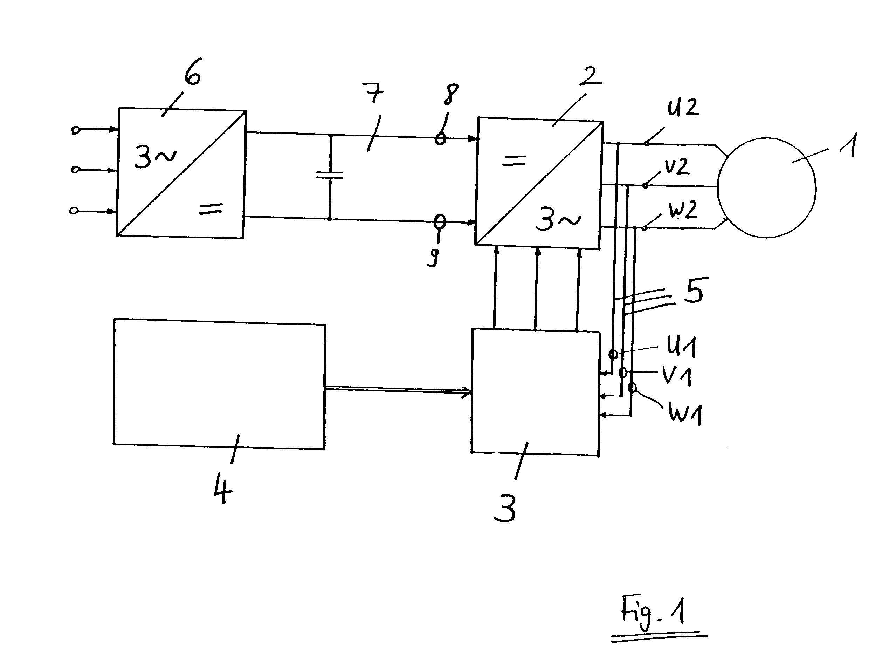

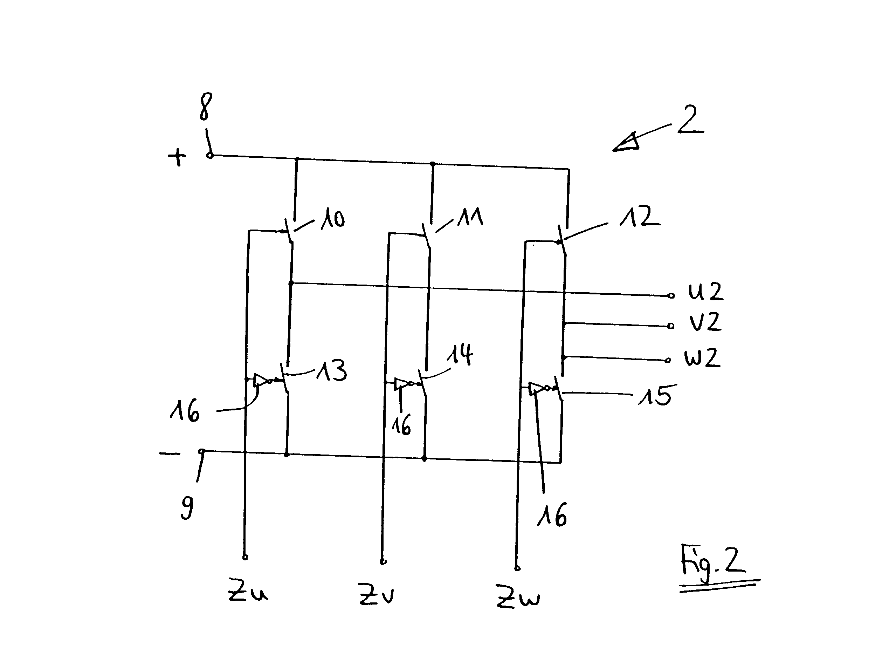

Das in Fig. 1 gezeigte Regelsystem für eine pulswechselrichtergesteuerte Drehfeldmaschine besteht aus dem dreiphasigen Asynchronmotor 1, dem Pulswechselrichter 2, dem Pulsgenerator 3 und der Maschinenführung 4. Der dreiphasige Asynchronmotor 1 wird durch Vorgabe eines Spannungsvektors gesteuert. Der Pulswechselrichter 2 speist den Asynchronmotor 1. Der Schaltzustand des Pulswechselrichters 2 wird von dem Pulsgenerator 3 gesteuert. Die Maschinenführung 4 gibt einen Soll-Spannungsvektor für den Pulsgenerator 3 vor. Die Ausgangsspannungen des Pulswechselrichters 2 und damit die Eingangsspannungen desAsynchronmotors 1 werden als Momentanwerte gemessen und durch die Rückführungen 5 dem Pulsgenerator 3 als den tatsächlichen Schaltzuständen des Pulswechselrichters 2 entsprechende Ist-Spannungen zugeführt, woraus der Ist-Spannungsvektor gebildet wird. Die momentanen Ausgangsspannungen des Pulswechselrichters 2 werden also im Pulsgenerator 3 berücksichtigt bzw. verwendet. Der Pulswechselrichter 2 ist Bestandteil eines Umrichters, bestehend aus Gleichrichter 6, Gleichspannungs-Zwischenkreis 7 und Pulswechselrichter 2. Fig. 2 zeigt das Prinzipschaltbild des Pulswechselrichters 2. Die an den Eingangsklemmen 8, 9 anliegende (nicht-ideale) Gleichspannung wird in eine an den Ausgangsklemmen U2, V2 und W2 anliegende, dreiphasige Drehspannung umgewandelt. Hierzu dienen die Wechselrichterschalter 10- 15, die paarweise entgegengesetzt geschaltet werden. Hierzu dienen die den Schaltern 13 bis 15 vorgeschalteten invertierenden Elemente 16. Der Schaltzustand des Pulswechselrichters wird über die binären Signale ZU, ZV und ZW vorgegeben.

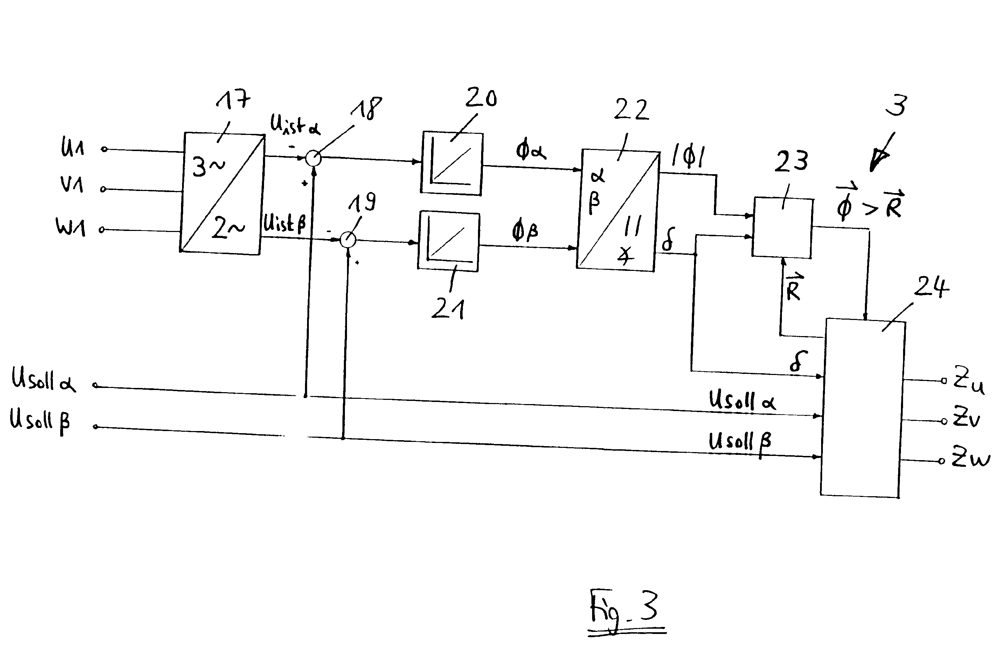

Fig. 3 zeigt den Signalflußplan des Pulsgenerators 3. An den Eingangsklemmen U1, V1 und W1 werden die drei gemessenen momentanen Spannungen des dreiphasigen Systems vorgegeben. Die Spannungswerte U1, V1 und W1 entsprechen den Ausgangsspannungen U2, V2 und W2 des Pulswechselrichters. Von der Maschinenführung 4 wird der Soll-Spannungsvektor dargestellt durch Usolla und Usollß. Der 3/2 Koordinatenwandler 17 wandelt die dreiphasige Ist-Spannung U 1, V1 und W1 in einen aus zwei Komponenten bestehenden Ist-Spannungsvektor Uista , Uistß um. An den beiden Subtrahiergliedern 18, 19 wird die Differenz zwischen den Komponenten des Soll-Spannungsvektors und des Ist-Spannungsvektors gebildet; dadurch findet eine vektorielle Subtraktion statt. Die vektorielle Differenz zwischen dem Soll-Spannungsvektor und dem Ist-Spannungsvektorwird anschließend in den Integratoren 20, 21 vektoriell integriert. Hierdurch entsteht der Vektor dargestellt durch ϕα und ϕß. Da der Vektor aus einer Integration der Spannung über die Zeit entstanden ist, kann er als "Flußvektor" interpretiert werden. Der "Flußvektor" (Vektor der Spannungszeitfläche), dargestellt durch die kartesischen Komponenten φα, ϕß wird dann durch den Koordinatenwandler 22 in eine Darstellung, bestehend aus Betrag/ 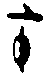 / und Winkel δ, umgewandelt. Der Betrag des "Flußvektors"/ 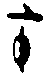 / und die Phase 0 des "Fluß- vektors" werden dem Komparator 23 zugeführt. Die Phase δ des Flußvektors 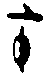 wird darüber hinaus dem Rechenglied 24 zugeführt. In das Rechenglied 24 geht weiterhin der Soll-Spannungsvektor Usoll a , Usollß ein. In dem Komparator 23 wird der "Flußvektor" (Vektor der Spannungszeitfläche) mit einem Grenzwert R verglichen. Im allgemeinen besteht dieser Grenzwert R̅ aus seinen Komponenten/R/ und Rphase. Es ist aber auch möglich, daß lediglich der Betrag/ 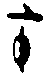 / des "Flußvektors" mit dem Betrag/ 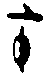 / des Grenzwerts R verglichen wird. Das Ergebnis dieses Vergleichs wird als binäres Signal dem Rechenglied 24 zugeführt. Wenn 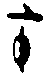 bzw. / 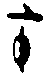 / größer ist als R bzw. / R /, wird vom Komparator 23 ein Signal an das Rechenglied 24 gegeben, aufgrund dessen der im Rechenglied vorhandene Rechenalgorithmus ein neues Schaltmuster Zu, Zv, Zw, also einen neuen Nachfolgezeiger, ermittelt. Gleichzeitig kann vom Rechenglied 24 ein neuer Grenzwert R errechnet und an den Komparator 23 gegeben werden.

Es wird also das Ergebnis der Integration in den Integratoren 20, 21, nämlich der integrierte Differenzvektor, zur Beeinflussung der Schaltzustände des Pulswechselrichters verwendet. Der Schaltzustand des Pulswechselrichters wird in Abhängigkeit von dem Soll-Spannungsvektor Usolla , Usollß und dem integrierten Differenzvektor φα , ϕß bzw. / 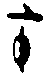 δ ermittelt. Der Schaltzustand für den Pulswechselrichter 2 wird vom Pulsgenerator 3 bzw. dessen Rechenglied 24 so bestimmt, daß er möglichst lange beibehalten werden kann.

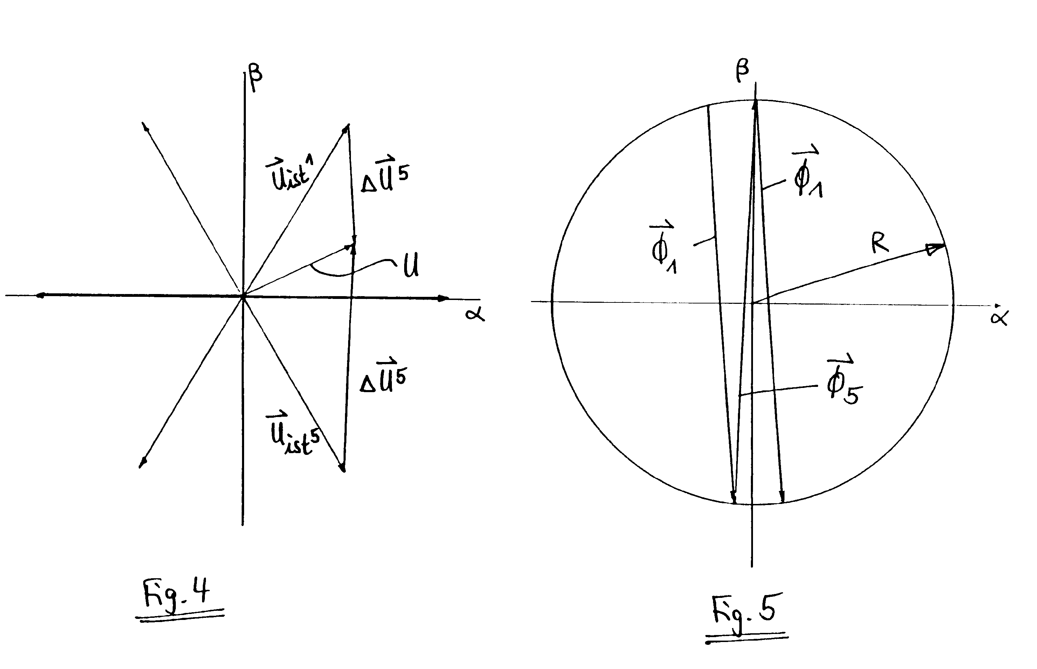

Die Fig. 4 zeigt die mit dem in Fig. 2 gezeigten, dreiphasigen Pulswechselrichter möglichen Spannungsvektoren unter der Annahme einer idealen Gleichspannung am Eingang des Pulswechselrichters und idealer Funktion desselben. Der Pulswechselrichter der Fig. 2 besitzt dabei acht Schaltzustände, so daß acht Spannungsvektoren möglich sind. Der erste Spannungsvektor liegt auf der a -Achse, die folgenden fünf Spannungsvektoren sind bei selbem Betrag umjeweils 60° gedreht. Die zwei weiteren möglichen Spannungsvektoren sind Nullvektoren im Koordinatenursprung. Ein beliebiger Spannungsvektor 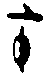 kann im zeitlichen Mittel durch gepulste Schaltung der acht Grundvektoren erreicht werden.

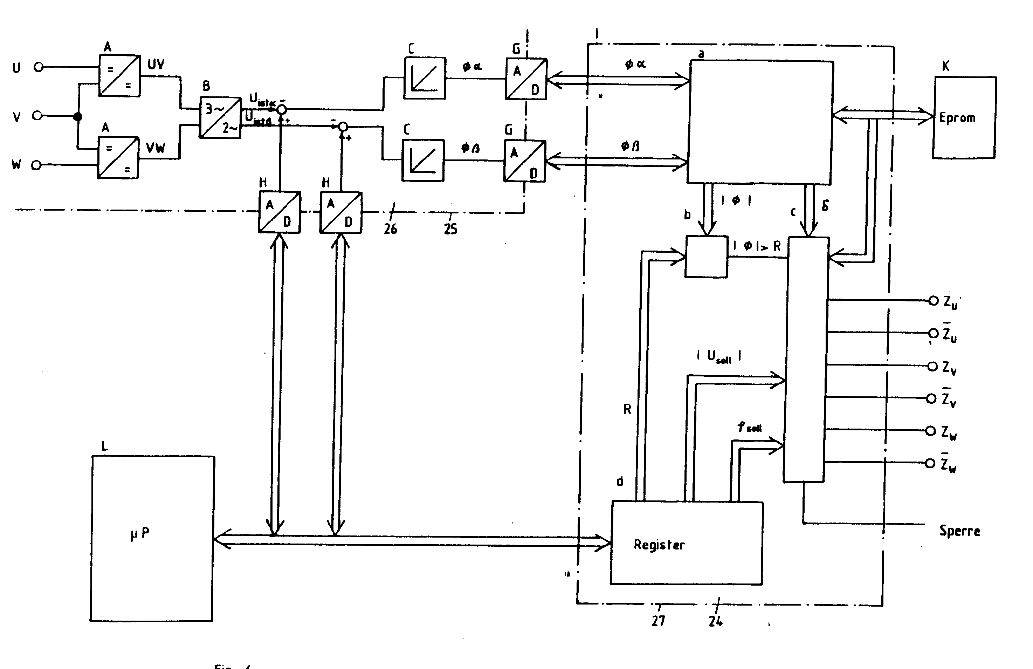

Die Fig. 5 zeigt eine Bahnkurve des "Flußvektors" (bzw. Vektors der Spannungszeitfläche) 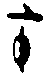 innerhalb der Toleranzfläche, die hier durch einen Kreis mit dem Radius/ R / dargestellt ist. Wie aus Fig. 5 ersichtlich, wird der Schaltzustand des Pulswechselrichters 2 vom Pulsgenerator 3 so bestimmt, daß er möglichst lange beibehalten werden kann, bis der "Flußvektor" erneut die Toleranzfläche verläßt.

Die Fig. 6 zeigt ein Blockschaltbild des Pulsgenerators. Der durch eine strichpunktierte Linie 25 abgegrenzte Teil 26 der Fig. 6 stimmt im wesentlichen mit der Darstellung der Fig. 3 überein. Durch die strichpunktierte Linie 27 wird das Rechenglied 24 umgrenzt. Es besteht aus einem Koordinatenwandler a zur Umwandlung von kathesischen in polare Koordinaten, einem Komparator b, einer Ausleselogik c für den optimalen Nachfolgezeiger, einem Register d und einem Wandler zur Umwandlung von Frequenz in Phasenwinkel.

Der Pulsgenerator dient zur Erzeugung einer dreiphasigen pulsbreitenmodulierten Spannung (Drehstromsystem). Er arbeitet dabei als Echtzeit-Regelsystem, d.h. er vergleicht die vorzugebende Sollspannung mit dem Spannungs-Istwert. Die erzeugten Ansteuerimpulse für einen dreiphasigen Pulswechselrichter (= Stellgröße) werden so vorgegeben, daß die mittlere Abweichung zwischen Soll- und Istwert einen bestimmten Grenzwert nicht überschreitet. Alle benötigten Soll- und Istwerte werden dabei in Raumzeigerdarstellung verarbeitet.

Da ein Pulswechselrichter stationär nur acht verschiedene Raumzeiger realisieren kann, muß der vorgegebene Sollwert, der normalerweise aus einer sinusförmigen Spannung besteht, durch abwechselndes Einschalten der verschiedenen Raumzeiger im zeitlichen Mittel erzeugtwerden. Dabei sollte mit möglichst kleiner Taktfrequenz eine gute Annäherung an den Sollwert erreichtwerden. Dies kann natürlich nur im zeitlichen Mittel erreicht werden (= Prinzip der Pulsbreitenmodulation).

Der beschriebene Modulator bildet den Raumzeiger der Spannungszeitfläche aus der Differenz zwischen Soll- und Istspannung (dieser Raumzeiger wird im folgenden stets als Differenz-Raumzeiger bezeichnet). Dies erfolgt durch getrennte Integration der a - und ß-Komponente in den Integratoren 20, 21. Das Regelsystem überwacht die ermittelte Spannungszeitfläche auf einen Grenzwert. Bei einer kreisförmigen Toleranzfläche bildet ein Kreis einen richtungsunabhängigen Grenzwert für den Raumzeiger. Wenn die Toleranzfläche verlassen wird, gibt das Regelsystem neue Ansteuerimpulse für den Pulswechselrichter so vor, daß durch den eingestellten neuen Istzeiger sich die Spannungszeitfläche verkleinert. Die Ansteuerimpulse werden also so vorgegeben, daß der Differenzraumzeiger in Richtung zum Toleranzkreismittelpunktwandert. Da der beschriebene Integrator zu keinem Zeitpunkt von anderen Größen als dem Sollwert oder dem Istwert beeinflußt wird, ist sichergestellt, daß die Abweichung zwischen Soll- und Istwert im zeitlichen Mittel Null beträgt. Die Größe der Toleranzfläche bestimmt die maximale kurzzeitig tolerierte Abweichung und bestimmt damit im Ergebnis die mittlere Taktfrequenz. Durch die Wahl der Größe der Toleranzfläche kann also der gewünschte Kompromiß zwischen hoher Regelgenauigkeit und geringer Schaltfrequenz erreicht werden.

Bisher wurde dargelegt, wann der Modulator den Istspannungszeiger verändert. Zusätzlich ist auch noch aus den bestehenden Möglichkeiten der neue Istspannungszeiger als optimaler Nachfolgezeiger zu bestimmen. Die Bestimmung des optimalen Nachfolgezeigers erfolgt aus den aktuellen Werten von:
- Sollzeiger
- derzeitiger Istspannungszeiger Zu, Zv, Zw
- Durchstoßpunkt des Differenzraumzeigers durch die Toleranzfläche

Verläßt der Differenzraumzeiger die Toleranzfläche, so sind sieben mögliche Nachfolgezeiger denkbar. Um den optimalen Nachfolgezeiger ermitteln zu können, werden, ausgehend vom Durchstoßpunkt, die Differenzraumzeiger für die sieben möglichen Nachfolgezeiger errechnet. Damit können die neuen voraussichtlichen Durchstoßpunkte durch die Toleranzfläche und die dafür notwendigen Zeiten, also die Verweilzeiten, vorausberechnet werden. Für diese Berechnung wird der Sollwert während dieser Zeit als konstant angesehen. Diese Annahme ist natürlich nur dann richtig, wenn die wirkliche Änderung des Sollzeigers vernachlässigbar ist. Dies ist dann erfüllt, wenn die Taktfrequenz etwa um den Faktor 10 größer ist als die Frequenz des Sollwertes. Diese Bedingung ist bei Pulswechselrichtern im Anwendungsbereich dieses Verfahrens gegeben. Bei Bedarf könnte aber ohne Aufwand auch die zu erwartende Veränderung des Soll-Zeigers in die Berechnung aufgenommen werden.

Der Nachfolgezeiger, der die längste Verweilzeit ergibt und der mit der kleinsten Anzahl von Umschaltungen im Wechselrichter vom derzeitigen Istzustand aus erreicht werden kann, wird als optimaler Nachfolgezeiger angesehen und ausgewählt.

Die technische Ausführung ist in der Fig. 6 gezeigt. Der Pulsmodulator läßt sich in einen Analogteil und einen Digitalteil aufteilen. Der Analogteil übernimmt die Erfassung der Ist-Spannung, den Vergleich von Soll-und Istwert und die Bildung des Differenzraumzeigers. Im nachgeschalteten Digitalteil erfolgt die Ermittlung des optimalen Nachfolgezeigers.

### a-Analogteil:

### Eingangsgrößen:

- Analoges Spannungspotential an den drei Ausgangsphasen des Wechselrichters U, V, W (bzw. U2, V2, W2 in Fig. 1 und 2)
- Spannungssollwert in Raumzeigerdarstellung Usolla, Usollß

### Ausgangsgröße:

- Spannungszeitfläche in Raumzeigerdarstellung ϕα, ϕß

### Funktion:

Aus den drei Spannungspotentialen des Wechselrichters U, V, W werden mit Hilfe von zwei Differenzmessungen Adie Leiterspannungen UV und VWgebildet. Im nachgeschalteten Koordinatenwandler B werden diea-und ß-Komponenten des Spannungsistzeigers Uista , Uistß gebildet. Diese beiden Komponenten werden jeweils mit der entsprechenden Komponente des Sollwertes Usolla , Usollß verglichen. Das Ergebnis dieses Vergleiches wird vektoriell, also getrennt aufintegriert. Die Ausgangssignale der beiden Integratoren entsprechen den a - und ß- Komponenten des Differenzraumzeigers φα, ϕß.

### b.Digitalteil:

### Eingangsgrößen: (Digitale Größen vom µP)

- Spannungssollwert in Raumzeigerdarstellung
- Radius Toleranzkreis R
- Sollfrequenz fs

### Ausgangsgröße: (Digitale Größen zum µP)

Phasenwinkel Phi

### Funktion:

### a) Ermittlung des optimalen Nachfolgezeigers

Die a - und ß-Komponenten der Spannungszeitfläche werden mit zwei A/D-Wandlern G digitalisiert. Mit Hilfe einer Tabelle (EPROM) wird daraus der Betrag ermittelt. Dieser Betrag wird mit dem Radius des Toleranzkreises verglichen. Ist er größer, so wird ein optimaler Nachfolgezeiger ermittelt, ansonsten erfolgt keine Änderung der Ansteuerimpulse für den Pulswechselrichter.

Für die Ermittlung des optimalen Nachfolgezeigers wird der momentane Winkel des Differenzraumzeigers ermittelt, also der Winkel des Durchstoßpunktes durch den Toleranzkreis. Aus dem gewonnenen Wert und den Informationen über den Spannungs-Sollwert und derzeitigen Istspannungszeiger wird aus einer Tabelle, die in dem EPROM abgelegt ist, der optimale Nachfolgezeiger ausgelesen und als neues Ansteuersignal ausgegeben.

### Vorgabe der übrigen Größen:

Für alle übrigen Größen besitzt der Pulsgenerator Register, die vom Mikroprozessor direkt angesprochen werden können.

### Testergebnisse:

### Geräuschverhalten, Oberschwingungsgehalt:

Oberschwingungsanalysen der Spannung und des Motorstromes ergeben eine Verteilung der Oberschwingungen über einen großen Frequenzbereich. Beim Motorstrom liegt der Bereich etwa zwischen 800 Hz und 2.500 Hz bei einer mittleren Taktfrequenz von etwa 1.200 Hz. Es treten dabei keine einzelnen Oberschwingungen mit relativ großer Amplitude (z.B. Taktfrequenz, die bei asynchronen bzw. synchronen Pulsmustern auftritt) auf. Dadurch ergibt sich als Motorgeräusch ein Rauschen, welches subjektiv viel angenehmer empfunden wird als der Pfeifton eines asynchronen bzw. synchronen Pulsmusters.

### Sinusqualität, Stabilität und Laufruhe:

Da zur Pulsgenerierung die gemessene Istspannung am Ausgang des Wechselrichters verwendet wird, werden alle Fehler, die durch Totzeiten im Wechselrichter, Spannungsabfälle an den Halbleiterschaltern oder durch wellige Zwischenkreisspannungen entstehen, automatisch berücksichtigt und optimal kompensiert. Es ergibt sich eine sehr gute Sinusqualität des Motorstroms über den ganzen Frequenzbereich, insbesondere auch bei sehr kleinen Frequenzen (kleiner als 5 Hz). Dies hat eine gute Stabilität des Motorstroms (auch keine pulsmusterbedingten Instabilitäten bei Frequenzänderungen) sowie sehr gute Rundlaufeigenschaften des Motors bis zur Frequenz Null zur Folge.

### Schaltfrequenz:

Durch geeignete Nachführung des Toleranzkreises kann die mittlere Taktfrequenz in einem weiten Spannungsbereich (ca. 20 % von UN bis 100 % von UN) etwa konstant gehalten werden. Bei kleineren Ausgangsspannungen reduziert sich die Taktfrequenz (bei etwa 2 % von UN ca. 150 Hz bei ca. 50 Mikrosekunden Totzeit im Wechselrichter). Es ergibt sich jedoch dadurch kein unangenehm lautes Geräusch oder unrunder Lauf des Motors.

### Modulationsfähigkeit:

Da die Sollwertvorgabe durch ein Analogsignal als Raumzeiger erfolgt, kann dieses in der Frequenz und Amplitude in gewissen Grenzen völlig frei eingestellt werden. Außerdem lassen sich sprungartige Änderungen des Phasenwinkels bzw. der Amplitude ohne Probleme realisieren, da dadurch vorerst "nur" die Integrationsgeschwindigkeiten der beiden Integratoren verändert werden. Damit ergibt sich einerseits eine sofortige Reaktion auf den neuen Sollwert, andererseits jedoch keine unkontrollierte Änderung der Ansteuerimpulse. Dadurch erscheint der Modulator bei geeigneter Maschinenführung auch gut geeignet für eine dynamisch hochwertige Regelung.

An den Grenzen des Anwendungsbereichs (z.B. bei sehr hohen Ausgangsfrequenzen) ist es möglich, von diesem Regelsystem ohne störende Übergangs-Vorgänge auf ein konventionelles System (z.B. mit Auslesen von off-line-optimierten Pulsmustern aus einer Tabelle) umzuschalten.
U, V, W : Spannungspotentiale Wechselrichterausgang
U_{istα}, U_{istβ} : a , β Komponente des Spannungsistwertes
Uₛₒₗₗ, U_{istβ} : α, β Komponente des Spannungssollwertes
| Uₛₒₗₗ|, Phiₛₒₗₗ : Betrag und Winkel der Sollspannung
R : Radius Toleranzkreis
Φ_{α}, Φ_{β} a, β Komponente der Spannungszeitfläche
|Φ|, δ : Betrag und Winkel der Spannungszeitfläche
Phi : akueller Phasenwinkel des f/Phi Wandlers
A Differenzbildener
B : 3/2 Koordinatenwandler
C : Integrator
G : A/D Wandler
H : D/A Wandler
I: ASIC
K Eprom
L Microprozessor
a Koordinatenwandler kartesisch => polar
b Komarator
c : Ausleselogi k für optimalen Nachfolgezeiger
d Register
e : Wandler Frequenz => Phasenwinkel

## Patentansprüche

1. Regelsystem für eine pulswechselrichtergesteuerte Drehfeldmaschine (1), bestehend aus
einer mehrphasigen, vorzugsweise dreiphasigen Drehfeldmaschine (1), vorzugsweise einer Asynchronmaschine,
einem die Drehfeldmaschine (1) mit mehrphasiger Wechselspannung, vorzugsweise Drehspannung, speisenden, mit Gleichspannung gespeisten Pulswechselrichter (2),
einem Pulsgenerator (3) zur Steuerung des Schaltzustandes des Pulswechselrichters (2),
und einer Maschinenführung (4) zur Vorgabe eines Soll-Spannungsvektors (Usoll a , Usollß) für den Pulsgenerator (3),
wobei die Ausgangsspannungen (U2, V2, W2) des Pulswechselrichters (2) gemessen und dem Pulsgenerator(3) als dem tatsächlichen momentanen Schaltzustand des Pulswechselrichters (2) entsprechende Ist-Spannung zugeführt werden,
dadurch gekennzeichnet,
daß im Pulsgenerator (3) die vektorielle Differenz zwischen dem Soll-Spannungsvektor (Usoll a , Usollß) und dem Ist-Spannungsvektor (Uist a , Uistß) gebildet wird,
daß diese Differenz anschließend vektoriell integriert (20, 21) wird
und daß das Ergebnis dieser Integration, also der integrierte Differenzvektor, zur Beeinflussung der Schaltzustände des Pulswechselrichters (2) verwendet wird.

2. Regelsystem nach Anspruch 1, dadurch gekennzeichnet, daß der integrierte Differenzvektor ( 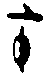 ), vorzugsweise der Betrag (/ 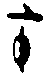 /) des integrierten Differenzvektors ( 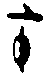 ), mit einem Grenzwert ( 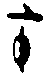 bzw. / R /) verglichen (23) wird und daß in Abhängigkeit von diesem Vergleich ein neuer Schaltzustand bestimmt (24) und an den Pulswechselrichter (2) weitergeleitet wird.

3. Regelsystem nach Anspruch 2, dadurch gekennzeichnet, daß der neue Schaltzustand in Abhängigkeit von dem Soll-Spannungsvektor (Usoll a , Usollß) und dem integrierten Differenzvektor (φα, Oß) ermittelt wird, wobei der Schaltzustand vorzugsweise so verändert wird, daß sich der Differenzvektor als Folge dieser Schalthandlung verkleinert.

4. Regelsystem nach Anspruch 2 oder 3, dadurch gekennzeichnet, daß der Grenzwert ( R ) in Abhängigkeit vom Soll-Spannungsvektor ermittelt wird.

5. Regelsystem nach einem der vorhergehenden Ansprüche, gekennzeichnet durch einen mit mehrphasiger Wechselspannung, vorzugsweise Drehspannung, gespeisten Gleichrichter (6) und einem vom Gleichrichter (6) gespeisten und den Pulswechselrichter (2) speisenden Gleichspannungs-Zwischenkreis (7).

6. Regelsystem nach einem der vorhergehenden Ansprüche, dadurch gekennzeichnet, daß der Schaltzustand vom Pulsgenerator (3) so bestimmt wird, daß er möglichst lange beibehalten werden kann.

7. Regelsystem nach einem der vorhergehenden Ansprüche, dadurch gekennzeichnet, daß die vektorielle Integration (20, 21) analog durchgeführt wird.

8. Regelsystem nach einem der vorhergehenden Ansprüche, dadurch gekennzeichnet, daß das Ergebnis der Integration (20, 21) digitalisiert und digital weiterverarbeitete wird.

9. Regelsystem nach Anspruch 8, dadurch gekennzeichnet, daß ein neuer Schaltzustand aus einem Speicher ausgelesen wird.

## Claims

1. A regulating system for a pulse inverter-controlled rotating field machine (1), consisting of
a multiphase, preferably three-phase rotating field machine (1), preferably an asynchronous machine,
a pulse inverter (2) feeding the rotating field machine (1) with a multiphase a.c. voltage, preferably a three-phase voltage, which inverter is fed by a d.c. voltage,
a pulse generator (3) for controlling the switching state of the pulse inverter (2),
and a machine control (4) for presetting a desired voltage vector (desired Ua, desired Uß) for the pulse generator (3),
in which arrangement the output voltages (U2, V2, W2) of the pulse inverter (2) are measured and fed to the pulse generator (3) as the actual voltage corresponding to the actual instantaneous switching state of the pulse inverter (2),
characterized in that
the vectorial difference between the desired voltage vector (desired Ua, desired Uß) and the actual voltage vector (actual Ua, actual Uß) is formed in the pulse generator (3),
that this difference is subsequently vectorially integrated (20, 21)
and that the result of this integration, that is to say, the integrated differential vector is used to act on the switching states of the pulse inverter (2).

2. A regulating system according to claim 1, characterized in that the integrated differential vector, pre- ferably the sum ( 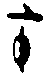 ) of the integrated differential vector ( 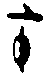 ) is compared (23) with a limiting value ( 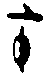 or / 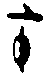 )/ and that a new switching state is determined (24) as a function of this comparison and is passed on to the pulse inverter (2).

3. A regulating system according to claim 2, characterized in that the new switching state is ascertained as a function of the desired voltage vector (desired Ua, desired Uß) and the integrated differential vector (φα, ϕß), in which arrangement the switching state is preferably modified in such a way that the differential vector decreases as a result of this switching action.

4. A regulating system according to claim 2 or 3, characterized in that the limiting value ( R ) is ascertained as a function of the desired voltage vector.

5. A regulating system according to one of the preceding claims, characterized by a rectifier (6) fed by a multiphase a.c. voltage, preferably a three-phase voltage, and an intermediate d.c. voltage circuit (7) fed by the rectifier (6) and feeding the pulse inverter (2).

6. A regulating system according to one of the preceding claims, characterized in that the switching state is determined by the pulse generator (3) in such a way that it can be maintained for as long as possible.

7. A regulating system according to one of the preceding claims, characterized in that the vectorial integration (20, 21) is effected in an analog mode.

8. A regulating system according to one of the preceding claims, characterized in that the result of the integration is digitized (21) and is processed further in a digital mode.

9. A regulating system according to claim 8, characterized in that a new switching state is read out from a memory.

## Revendications

1. Système pour réguler une machine à champ tournant (1) commandée paronduleur d'impulsion, consistant en
une machine à champ tournant (1), de préférence une machine asynchrone, polyphasée, de préférence triphasée,
un onduleur d'impulsion (2) alimenté en tension continue, alimentant la machine à champ tournant (1) en tension alternative polyphasée, de préférence triphasée,
un générateur d'impulsion (3) pour commander l'état de commutation de l'onduleur d'impulsion (2).
et un guidage de machine (4) pour régler un vecteur de tension théorique (Usolla, Usollβ) pour le générateur d'impulsion (3),
les tensions de sortie (U2, V2, W2) de l'onduleur d'impulsion (2) étant mesurées et transmises au générateur d'impulsion (3) comme étant la tension réelle correspondant à l'état de commutation instantané effectif de l'onduleur d'impulsion (2),
caractérisé en ce que
la différence vectorielle entre le vecteur de tension theorique (Usolla, Usollβ) et le vecteur de tension réel (Uista, Uistß) est formée dans le générateur d'impulsion (3),
que cette différence est ensuite intégrée vectoriellement (20, 21)
et que le résultat de cette intégration, donc le vecteur de différence intégré, est utilisé pour influencer les états de commutation de l'onduleur d'impulsion (2).

2. Système pour réguler selon la revendication 1, caractérisé en ce que le vecteur de différence intégré ( 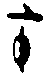 ), de préférence le montant (/ 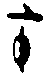 ) du vecteur de différence intégré ( 0 ) est comparé (23) avec une valeur limite ( 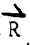 et R /) et qu'en fonction de cette comparaison, un nouvel état de commutation est déterminé (24) et est transmis à l'onduleur d'impulsion (2).

3. Système pour réguler selon la revendication 2, caractérisé en ce que le nouvel état de commutation est déterminé en fonction du vecteur de tension théorique (Usolla, Usollβ) et le vecteur de différence intégré (ϕ a, 0β), l'état de commutation étant de préférence modifié de manière à ce que le vecteur de différence diminue en conséquence de cet acte de commutation.

4. Système pour réguler selon les revendications 2 ou 3, caractérisé en ce que la valeur limite (R) est déterminée en fonction du vecteur de tension théorique.

5. Système pour réguler selon l'une quelconque des revendications précédentes, caractérisé par un redresseur (6) alimenté en tension alternative polyphasée, de préférence triphasée, et un circuit intermédiaire à tension continue (7) alimenté par le redresseur (6) et alimentant l'onduleur d'impulsion (2).

6. Système pour réguler selon l'une quelconque des revendications précédentes, caractérisé en ce que l'état de commutation est déterminé par le générateur de pulsion (3) de manière à pouvoir être maintenu aussi longtemps que possible.

7. Système pour réguler selon l'une quelconque des revendications précédentes, caractérisé en ce que l'intégration vectorielle (20, 21) est effectuée par analogie.

8. Système pour réguler selon l'une quelconque des revendications précédentes, caractérisé en que le résultat de l'intégration (20, 21) est digitalisé et transformé digitalement.

9. Système pour réguler selon la revendication 8, caractérisé en ce que le nouvel état de commutation est lu dans une mémoire.
